# EUROPÄISCHE PATENTANMELDUNG

(11) **EP 2 116 449 A1**
(43) Veröffentlichungstag der Anmeldung: **11.11.2009**
(21) Anmeldenummer: 08103904.2
(22) Anmeldetag: 09.05.2008
(51) Int. Cl.: B62D 25/20, B62D 29/04, B62D 33/04, B60P 7/08, B60P 7/14

(54) **Paneel für einen Kofferaufbau eines Lastkraftwagens, Anhängers und/oder Aufliegers**

(71) Anmelder: Schmitz Cargobull AG, 48341 Altenberge (DE)
(72) Erfinder: Beelmann, Reinhard, Dipl.- Ing., 45721 Haltern am See (DE); Heßling, Alfons, 48683 Ahaus (DE); Küpers, Josef, 48703 Stadtlohn (DE)
(74) Vertreter: Cohausz & Florack

(57) **Zusammenfassung**

Die Erfindung betrifft ein Paneel, insbesondere Seitenwandpaneel, Dachpaneel, Stirnwandpaneel und/oder Bodenpaneel, für einen Kofferaufbau eines Lastkraftwagens, Anhängers und/oder Aufliegers, mit einer Innenseite, einer Außenseite und mehreren umlaufend angeordneten Kanten, wobei an der Innenseite eine innere Decklage und an der Außenseite eine äußere Decklage vorgesehen ist, wobei zwischen der inneren Decklage und der äußeren Decklage ein geschäumter Kunststoff vorgesehen ist und wobei an wenigstens einer Kante des Paneels die innere Decklage und die äußere Decklage über wenigstens ein Rahmenprofil miteinander verbunden sind. Um das Paneel einfach und schnell bei geringem Platzbedarf herstellen zu können, ist vorgesehen, dass der Kunststoff an das wenigstens eine Rahmenprofil angeschäumt ist.

## Beschreibung

Die Erfindung betrifft ein Paneel, insbesondere Seitenwandpaneel, Dachpaneel, Stirnwandpaneel und/oder Bodenpaneel, für einen Kofferaufbau eines Lastkraftwagens, Anhängers und/oder Aufliegers, mit einer Innenseite, einer Außenseite und mehreren umlaufend angeordneten Kanten, wobei an der Innenseite eine innere Decklage und an der Außenseite eine äußere Decklage vorgesehen ist, wobei zwischen der inneren Decklage und der äußeren Decklage eine Kernlage aus geschäumtem Kunststoff vorgesehen ist und wobei an wenigstens einer Kante des Paneels die innere Decklage und die äußere Decklage über wenigstens ein Rahmenprofil miteinander verbunden sind. Zudem betrifft die Erfindung einen Kofferaufbau mit einem derartigen Paneel. Darüber hinaus betrifft die Erfindung auch ein Verfahren zur Herstellung des genannten Paneels.

Paneele der genannten Art sind seit geraumer Zeit bekannt. Sie kommen insbesondere für Kofferaufbauten für Kühltransporte zum Einsatz, da der geschäumte Kunststoff der Kernlage eine gute Wärmedämmung ermöglicht. Die Herstellung der Paneele erfolgt beispielsweise derart, dass eine Decklage des Paneels in eine Form eingebracht wird, bevor in die Form der zu schäumende Kunststoff eingebracht wird. Nachdem der zu schäumende Kunststoff in die Form eingebracht worden ist, wird durch Aufbringen einer weiteren Decklage ein Hohlraum für den geschäumten Kunststoff gebildet und die Form in eine Presse eingebracht. Dort schäumt und härtet der Kunststoff dann zur Kernlage aus. Nach einer bestimmten, sogenannten Formstandzeit wird das entstandene Rohpaneel schließlich entformt und weiter bearbeitet.

In weiteren Montageschritten werden an den Kanten des Rohpaneels Rahmenprofile angebracht, die beispielsweise als Anschlussprofil für eine Stirnwand dienen oder einen Teil des Rückwandrahmens des Kofferaufbaus darstellen. Bedarfsweise wird dazu ein Teil des ausgeschäumten Kunststoffs entfernt, damit das Rahmenprofil passgenau angebracht werden kann. Für den Fall, dass das anzubringende Rahmenprofil einen nach innen geöffneten Hohlraum umschließt, der beim Anbringen des Rahmenprofils an dem Paneelrohling nicht vollständig geschlossen wird, wird der verbleibende Teil des Hohlraums mit einer Art Bauschaum ausgeschäumt, um die Wärmedämmung des Kofferaufbaus zu verbessern.

Die einzelnen Paneele können anschließend zusammen mit anderen Paneelen zu einem Kofferaufbau zusammengesetzt werden.

Da die zum Bau von Kofferaufbauten verwendeten Paneele große Abmessungen haben, besteht ein gesteigerter Bedarf an einem möglichst effektiven Herstellungsprozess des Kofferaufbaus insgesamt und damit auch des Paneels als solchem. Einerseits soll das Handling des Paneels auf ein Minimum beschränkt werden, um Platz zu sparen. Andererseits soll das Herstellen der Paneele und des Koffers möglichst schnell erfolgen, was ebenfalls zu einer Einsparung von Platz bei gegebenem Durchsatz führt. Ferner ermöglicht eine schnellere, weil einfachere Montage auch aus anderen als Platzgründen eine kostengünstigere Herstellung des Paneels bzw. des Kofferaufbaus.

Daher liegt die Aufgabe der vorliegenden Erfindung darin, ein Paneel und ein Verfahren zu dessen Herstellung derart auszugestalten und weiterzubilden, dass das Paneel einfach und schnell bei geringem Platzbedarf hergestellt werden kann.

Diese Aufgabe ist bei einem Paneel nach dem Oberbegriff des Anspruchs 1 dadurch gelöst, dass der Kunststoff der Kernlage an das wenigstens eine Rahmenprofil angeschäumt ist.

Zudem ist die Aufgabe gemäß Anspruch 11 gelöst durch ein Verfahren,
- bei dem eine die Innenseite des Paneels bildende innere Decklage und eine die Außenseite des Paneels bildende äußere Decklage mit wenigstens einem eine Kante des Paneels bildenden Rahmenprofil verbunden werden,
- bei dem ein Hohlraum zum Ausschäumen mit Kunststoff jedenfalls teilweise durch das wenigstens eine Rahmenprofil definiert wird,
- bei dem der Hohlraum zur Bildung einer Kernlage zwischen der inneren Decklage und der äußeren Decklage mit einem Kunststoff ausgeschäumt wird.

Die Erfindung hat erkannt, dass sich die Herstellung der Paneele optimieren lässt, indem wenigstens ein Rahmenprofil an einer Kante bereits vor dem Ausschäumen des oder wenigstens eines Hohlraums des Paneels mit der inneren Decklage und der äußeren Decklage verbunden wird. Wird das Rahmenprofil wenigstens auch mit einem Klebstoff an der inneren und/oder der äußeren Decklage befestigt, kann dieser Klebstoff parallel zum geschäumten Kunststoff aushärten, wodurch eine Zeitersparnis und die Einsparung eines zusätzlichen Arbeitsschritts erzielt wird.

Darüber hinaus kann durch das Ausschäumen eine optimale Anbindung zwischen dem Rahmenprofil und dem geschäumten Kunststoff sichergestellt werden. Es werden Hohlräume oder Spalte vermieden, die bei einem nachträglichen Anbringen des Rahmenprofils zwischen diesem und dem geschäumten Kunststoff entstehen können.

Ein weiterer Vorteil besteht darin, dass das Rohpaneel nach dem Schäumen nicht mehr zur Montage des Rahmenprofils bewegt bzw. hierfür keine gesonderte Arbeitsstation vorgesehen werden muss, was Platz, Zeit und Kosten für die Montage einspart.

Das Rahmenprofil kann zudem in eine Form zum Ausschäumen des Paneels eingebracht werden, welche exakte Abmessungen vorgibt. Die Positionierung und Befestigung des Rahmenprofils an der inneren und/oder der äußeren Decklage kann daher unter Ausgleich gegebener Toleranzen an der jeweiligen Verbindungsstelle erfolgen. Entweder erfolgt die Befestigung dabei in der Form einer Schäumanlage oder aber es wird in der Form nur eine Positionierung zum Verbinden der Bauteile außerhalb der Form vorgenommen.

Unter einem Anschäumen im Sinne der Erfindung wird das Schäumen des Kunststoffs gegen das Rahmenprofil bzw. ein anderes Bauteil verstanden. Mit anderen Worten ist das angeschäumte Bauteil bereits beim Schäumen und insbesondere beim Aushärten des geschäumten Kunststoffs flächig am Kunststoff vorgesehen und wird nicht erst nach dem Aushärten des Kunststoffs an diesem angebracht bzw. mit diesem verklebt. Es kommt daher regelmäßig zu einem unmittelbaren Anhaften des Schaums an dem angeschäumten Rahmenprofil ohne die Verwendung von einem separaten Klebstoff. Die Adhäsionskräfte zwischen dem Rahmenprofil und dem geschäumten Kunststoff werden durch den geschäumten Kunststoff beim Aushärten desselben hervorgerufen. Man spricht in diesem Zusammenhang auch vom Ausbilden einer Schwarte am Rand des geschäumten Kunststoffs.

Das Rahmenprofil wird aber nicht vollkommen separat vom übrigen Paneel angeschäumt oder ausgeschäumt. Vielmehr erfolgt dies zusammen mit einer Kernlage zwischen der inneren Decklage und der äußeren Decklage. Da die Kernlage eine Art Kern des Paneels darstellt, ist die Kernlage nicht nur unmittelbar angrenzend zu dem wenigstens einen Rahmenprofil vorgesehen, sondern erstreckt sich bis in einem Kernbereich in das Paneel hinein. Die Kernlage kann dabei das Paneel zwischen der inneren Decklage und der äußeren Decklage vollständig oder nur bereichsweise ausfüllen. Welche Form die Kernlage aufweist hängt davon ab, welche weiteren Bauteile die Form des auszuschäumenden Hohlraums definieren und wie diese Bauteile den Hohlraum ausformen. Die Kernlage kann auch mehrere separate Bereiche geschäumten Kunststoffs aufweisen. Der an das wenigstens eine Rahmenprofil angeschäumte Bereich der Kernlage erstreckt sich aber dennoch in nennenswerter Weise in den Zwischenraum zwischen der inneren Decklage und der äußeren Decklage hinein.

Durch den Begriff Kernalge wird also letztlich verdeutlicht, dass das Paneel nicht durch das Ausschäumen eines nach dem Schäumen der Kernlage verbleibenden Spalts hergestellt ist, da dann der Kunststoff der Kernlage nicht an das Rahmenprofil angeschäumt wäre. In diesem Falle wäre die der Erfindung zu Grunde gelegte Aufgabe auch nicht erfüllt.

Verfahrensmäßig zeichnet sich die Erfindung dahingehend aus, dass das Rahmenprofil wenigstens eine Begrenzung des Hohlraums für den Kunststoff beim Ausschäumen bildet, so dass das Rahmenprofil letztlich vom Kunststoff angeschäumt wird. Der Hohlraum wird jedenfalls teilweise durch das Rahmenprofil begrenzt und kann ebenfalls teilweise auch von weiteren Bauteilen des Paneels, wie die innere Decklage oder die äußere Decklage, begrenzt sein, die dann vorzugsweise ebenfalls angeschäumt werden. Letztlich bildet das Rahmenprofil also einen Teil der Form für den zu schäumenden Kunststoff zum Ausbilden der Kernlage des Paneels. Diese Form ist nicht zu verwechseln mit einer Form der Schäumanlage, in der das Rahmenprofil, die innere Decklage und/oder die äußere Decklage zur genauen Positionierung und Bildung des eigentlichen Hohlraums eingebracht werden. Diese Form kann jedoch gleichwohl auch einen Teil des Hohlraums und damit der auszuschäumenden Form bilden.

Die Kernlage kann wie bereits dargelegt worden ist bedarfsweise sehr unterschiedlich geformt sein. In jedem Fall erstreckt sich die Kernlage von dem wenigstens einen Rahmenprofil bis in einen Kernbereich des Paneels zwischen der inneren Decklage und der äußeren Decklage.

Vorteilhafte Ausgestaltungen werden im Folgenden erläutert, wobei der Einfachheit halber und zur Vermeidung unnötiger Wiederholungen die vorrichtungsmäßigen und verfahrensmäßigen Ausgestaltungen gemeinsam beschrieben werden. Der Bezug zur Vorrichtung bzw. dem Verfahren ergibt sich für den Fachmann anhand des Kontextes.

Bei einer ersten Ausgestaltung des Paneels erstreckt sich das wenigstens eine Rahmenprofil im Wesentlichen entlang der gesamten Kante des Paneels und schließt die Kante vorzugsweise nach außen ab. Mit anderen Worten bildet das Rahmenprofil eine Art Kantenabschluss nach außen. Es wird folglich auf das Rahmenprofil zur Bildung des äußeren Abschlusses des Paneels kein weiteres Profil oder dergleichen aufgesetzt. Dies führt weiter zu einer Vereinfachung des Herstellungsprozesses. Das Rahmenprofil kann daher selbst ein aus mehreren Einzelbauteilen zusammengesetztes, relativ aufwändig geformtes Bauteil sein, wenn dies erforderlich ist. Das nachtägliche Anbringen von Anbauteilen am Rahmenprofil ist jedoch möglich.

Ein Rahmenprofil kann einen zum Inneren des Paneels geöffneten Hohlraum umschließen, was beispielsweise bei Rahmenprofilen mit einem U-förmigen Querschnitt der Fall ist. In solch einem Fall ist es bevorzugt, wenn der entsprechende Hohlraum des Rahmenprofils von dem geschäumten Kunststoff der Kernlage mit ausgeschäumt ist. Dies erfolgt dann vorzugsweise nicht in einem separaten Schritt, sondern der Kunststoff dringt neben anderen Bereichen zwischen der inneren Decklage und der äußeren Decklage auch in den entsprechenden Hohlraum des Rahmenprofils ein und schäumt diesen aus. Dadurch verbleiben keine Hohlräume, die sich ungünstig auf die Wärmedämmung auswirken können. Andererseits ist es nicht erforderlich, die Hohlräume des Rahmenprofils in einem separaten Schritt, beispielsweise mit einem schlechter dämmenden Schaum, auszuschäumen oder zu füllen.

Bevorzugt handelt es sich bei dem wenigstens einen Rahmenprofil um ein Rückwandrahmenprofil und/oder ein Stirnwandrahmenprofil. Im Falle eines Rückwandrahmenprofils, das regelmäßig einen etwa U-förmigen Querschnitt aufweist, wird der Hohlraum des Rückwandrahmenprofils gleich mit ausgeschäumt. Außerdem ist das Rückwandrahmenprofil recht massiv und sollte daher möglichst früh verbaut werden. Bei der Verwendung eines Stirnwandrahmenprofils alternativ oder zusätzlich zu einem Rückwandrahmenprofil kann ebenfalls ein frühes Verbauen erreicht werden, was sich vorteilhaft auf den gesamten Herstellungsprozess des Kofferaufbaus auswirkt. Wird ein Rückwandrahmenprofil und ein Stirnwandrahmenprofil verwendet, ergibt sich - sofern die Längskanten des Paneels keines Rahmenprofils bedürfen - der besondere Vorteil, dass die Paneele nach dem Ausschäumen direkt in einen Puffer überführt und aus diesem Puffer zum Zusammenbau von Kofferaufbauten aus fertig vorkonfektionierten Paneelen entnommen werden können.

Insbesondere im Zusammenhang mit der Verwendung eines Rückwandrahmenprofils und eines Stirnwandrahmenprofils - aber nicht nur dann - ist es bevorzugt, wenn die zwei Rahmenprofile an einander gegenüberliegenden Kanten des Paneels vorgesehen sind und der Kunststoff der Kernlage an beide Rahmenprofile angeschäumt ist. Dies ermöglicht beispielsweise einen Toleranzausgleich in Längs- und/oder Querrichtung des Paneels durch eine äußere Form, in die die zwei Rahmenprofile positionsgenau eingebracht werden können. Die Kernlage kann in diesem Fall auch aus zwei separaten Bereichen bestehen, von denen der Kunststoff eines Bereichs an das eine Rahmenprofil angeschäumt ist und der Kunststoff des anderen Bereichs an das andere Rahmenprofil angeschäumt ist.

An den Längskanten des Paneels können alternativ oder zusätzlich zum Rückwandrahmenprofil und/oder zum Stirnwandrahmenprofil, die beide an den Querkanten des Paneels vorgesehen sind, ebenfalls angeschäumte Rahmenprofile vorgesehen sein. Dann könnte ein im Wesentlichen geschlossener Hohlraum erhalten werden, der dann durch den eingebrachten Kunststoff ausgeschäumt würde. Dies ist jedoch dann nicht bevorzugt, wenn die Seitenrahmenprofile zu einer unerwünschten Kältebrücke zur äußeren Decklage des Paneels oder eines angrenzenden Paneels des Kofferaufbaus führen würden.

Auch ohne dass ein geschlossener Hohlraum zum Ausschäumen mit dem Kunststoff durch Teile des Paneels selbst gebildet wird, wird neben dem wenigstens einen Rahmenprofil vorzugsweise auch die innere Decklage und/oder die äußere Decklage jedenfalls teilweise angeschäumt. Das Rahmenprofil bildet dann beispielsweise zusammen mit der inneren Decklage und der äußeren Decklage einen Zwischenraum, der anschließend von dem Kunststoff ausgeschäumt wird. Die innere und die äußere Decklage begrenzen damit unmittelbar die Kernlage aus geschäumtem Kunststoff.

Bei einer weiteren Ausgestaltung des Paneels ist in einem geeigneten Rahmenprofil eine Entlüftungsöffnung vorgesehen, aus der dann die beim Schäumen des Kunststoffs der Kernlage verdrängte Luft entweichen kann. Wenn diese Entlüftungsöffnung in einem nicht durch das Paneel selbst gebildeten Teil der Begrenzung des auszuschäumenden Hohlraums, also in der immer wieder zu verwendenden Form der Schäumanlage vorgesehen wäre, bestände beispielsweise die Gefahr des schleichenden Verstopfens durch den Kunststoff. Das Stirnwandrahmenprofil ist deshalb besonders geeignet zur Bereitstellung der Entlüftungsöffnung, da dieses im Kofferaufbau auf Stoß mit einem angrenzenden Paneel verbunden sein kann, wobei die Entlüftungsöffnung abgedeckt wird. Dies wäre im Falle eines Rückwandrahmenprofis nicht ohne weiteres ebenso einfach möglich.

Alternativ oder zusätzlich kann ein Rahmenprofil einen Kanal aufweisen, in dem die Expansionsfront des Schaums beim Schäumen der Kernlage ausläuft. Das Volumen des geschäumten Kunststoffs kann vorab nicht exakt bestimmt werden. Im Falle eines entsprechenden Kanals im Rahmenprofil kann im Falle einer geringen Überfüllung mit Kunststoff ein Austritt des Kunststoffs, beispielsweise aus der Entlüftungsöffnung, vermieden werden. Der überschüssige Kunststoffschaum sammelt sich stattdessen in dem Kanal. Im Falle einer geringen Unterfüllung tritt weniger bis kein geschäumter Kunststoff in den Kanal ein, der übrige Hohlraum des Paneels ist jedoch vollständig ausgeschäumt. Schwankungen in der Füllmenge können so ausgeglichen werden. Vorzugsweise ist dieser Kanal einer Entlüftungsöffnung vorgelagert im selben Rahmenprofil angeordnet. Um das Austreten von Kunststoff sicher zu verhindern, kann der Kanal wenigstens in einer Richtung mehrfach gewunden sein. Unter einem mehrfach gewundenen Kanal wird beispielsweise ein geschlängelter Kanal mit mehreren Richtungswechseln oder einer ähnlichen Kanalform verstanden.

Eine weitere Ausgestaltung des Paneels ist insbesondere dann bevorzugt, wenn zwischen der inneren und der äußeren Decklage eine Mehrzahl von mehr oder weniger separat geschäumten Zwischen- oder Hohlräumen vorgesehen ist. Es können dann mehrere separat auszuschäumende Hohlräume oder abschnittsweise miteinander verbundene Bereiche eines einzigen auszuschäumenden Zwischen- oder Hohlraums vorgesehen sein. Mit anderen Worten setzt sich die Kernlage aus unterschiedlichen Bereichen geschäumten Kunststoffs zusammen, die abschnittsweise miteinander verbunden oder aber auch voneinander beabstandet sein können. Dabei wird dann ein Hohlprofil in das Paneel eingebracht, was nach dem Ausschäumen im Paneel verbleiben kann. Das Hohlprofil kann dann von außen zugeführten, noch nicht geschäumten Kunststoff, also Kunststoffrohmaterial, aufnehmen und über seine Länge mehr oder weniger gleichmäßig im Paneel verteilen. Dazu erstreckt sich das Hohlprofil längs und/oder quer zum Paneel. Zum vergleichmäßigenden Abgeben von aufgenommenem Kunststoff weist das Hohlprofil über seine Länge eine Reihe von Öffnungen auf. Diese können unter Berücksichtigung fluiddynamischer Gegebenheiten in Größe und Abstand variierend vorgesehen sein.

Die zuvor genannte Ausgestaltung des Paneels findet insbesondere bei Bodenpaneelen Verwendung, da in diesen Paneelen eine Reihe von Querträgern in Längsrichtung voneinander beabstandet vorgesehen sind. Die Querträger erstrecken sich zwischen der inneren und der äußeren Decklage und unterteilen das Innere des Paneels bzw. dessen Kernlage in eine Reihe von wenn überhaupt abschnittsweise miteinander verbundenen, auszuschäumenden Segmenten.

Als geschäumter bzw. zu schäumender Kunststoff für die Kernlage kommt vorzugsweise ein Polyurethanmaterial in Frage. Derartige Materialien lassen sich gut verarbeiten, weil sie sehr gut hinsichtlich des Ausschäumens und Aushärtens eingestellt werden können und eine gute Wärmedämmung zulassen.

Zudem ist es zur Erzielung eines ebenen äußeren Abschlusses in der zu pressenden Form der Schäumanlage bevorzugt, wenn die innere Decklage und oder die äußere Decklage im Anschlussbereich an das wenigstens eine Rahmenprofil, vorzugsweise um die Profilbreite, beispielsweise in die Kernlage eingelassen ist. Die Form der Schäumanlage kann also einen ebenen Boden und/oder einen ebenen Deckel aufweisen, wenn das wenigstens eine Rahmenprofil bündig zur Außenseite der äußeren Decklage und/oder zur Innenseite der inneren Decklage mit den beiden Decklagen verbunden ist.

Das zuvor insgesamt beschriebene Paneel kann vorzugsweise in einem Kofferaufbau als Dachpaneel, Seitenwandpaneel, Stirnwandpaneel und/oder Bodenpaneel Verwendung finden. Damit übertragen sich die Vorteile der Paneelherstellung, die bereits beschrieben worden sind, unmittelbar auf die Herstellung des Kofferaufbaus.

Nachfolgend wird die Erfindung anhand einer lediglich ein Ausführungsbeispiel darstellenden Zeichnung näher erläutert. In der Zeichnung zeigt
- Fig. 1: einen Lastkraftwagen mit einem Kofferaufbau mit einem erfindungsgemäßen Paneel,
- Fig. 2: das erfindungsgemäße Paneel aus Fig. 1 in einer Draufsicht von oben,
- Fig. 3: das rückseitige Ende des Paneels aus Fig. 2 in einem vertikalen Schnitt entlang der Ebene III-III aus Fig. 2 und
- Fig. 4: das stirnseitige Ende des Paneels aus Fig. 2 in einem vertikalen Schnitt entlang der Ebene IV-IV aus Fig. 2.

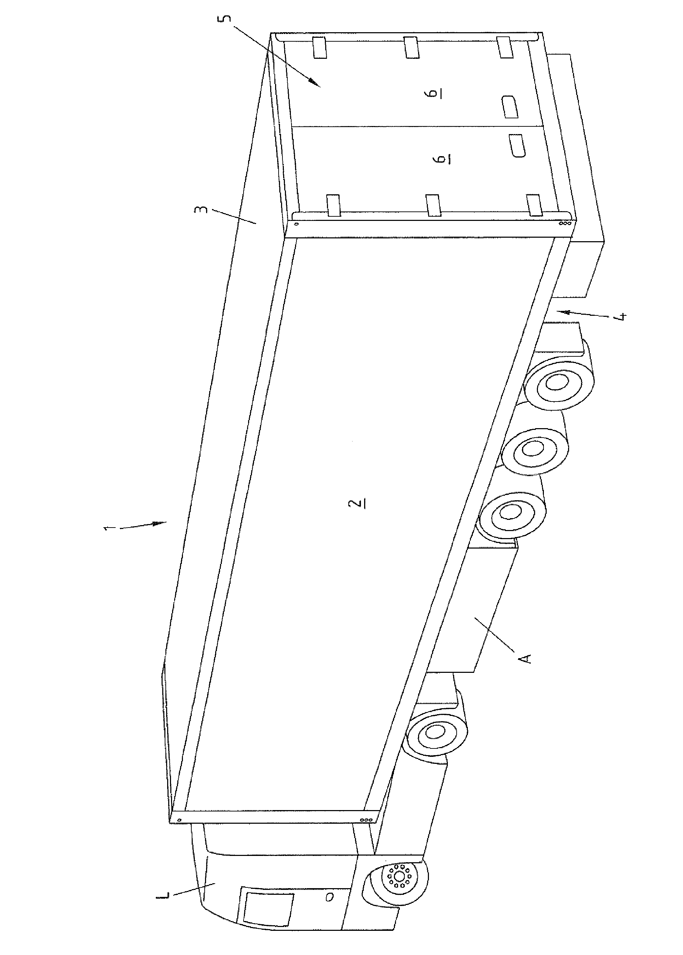

In der Fig. 1 ist ein Lastkraftwagen L mit einem Auflieger A dargestellt, der einen Kofferaufbau 1 trägt. Der Kofferaufbau 1 ist im Wesentlichen aus zwei Seitenwandpaneelen 2, einem Dachpaneel 3, einem Bodenpaneel 4, einem Stirnwandpaneel und einer Rückwand 5, die vorliegend wiederum durch zwei Türen 6 gebildet wird, zusammengesetzt. Der Kofferaufbau könnte auch direkt auf einem Lastkraftwagen oder einem Anhänger montiert sein. Dies würde sich hauptsächlich auf die Abmessungen, aber nur unwesentlich auf die Funktionalität der verwendeten Paneele auswirken, die nachfolgend beschrieben wird.

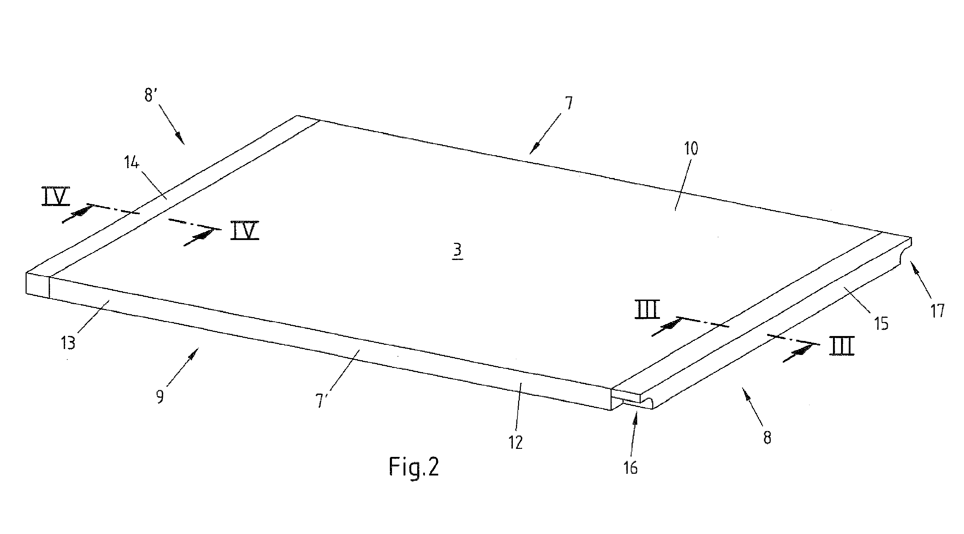

Das Dachpaneel 3 des in der Fig. 1 dargestellten Kofferaufbaus 1 ist in der Fig. 2 noch einmal vergrößert und frei geschnitten dargestellt. Bei dem dargestellten und insoweit bevorzugten Dachpaneel 3 sind zwei Längskanten 7,7' und zwei Querkanten 8,8' vorgesehen, die jeweils parallel zueinander ausgerichtet sind. Damit weist das Dachpaneel 3 eine rechteckige Form auf. Es könnte aber auch eine andere Anzahl Kanten vorgesehen sein, etwa wenn das Paneel eine dreieckige Form aufweisen soll.

Zusammengesetzt ist das Dachpaneel 3 im Wesentlichen aus einer inneren Decklage 9, die dem Innenraum des Kofferaufbaus 1 zugeordnet ist, einer äußeren Decklage 10, die das Dachpaneel 3 nach außen abgrenzt, zwei an gegenüberliegenden Querkanten angeordneten Rahmenprofilen und einer zwischen der inneren Decklage 9 und der äußeren Decklage 10 angeordneten Kernlage 12 aus einem geschäumten Kunststoff 13. An den Längskanten 7 sind keine separaten Profile vorgesehen. Dort bilden die Ränder der Decklagen 9,10 und die Ränder der Kernlage 12, d.h. des geschäumten Kunststoffs 13, den äußeren Abschluss des Dachpaneels 3.

In der Blickrichtung der Fig. 2 ist links am Dachpaneel 3 ein Stirnwandrahmenprofil 14 zum Verbinden des Dachpaneels 3 mit dem Stirnwandpaneel vorgesehen, während rechts ein Rückwandrahmenprofil 15 als Teil des Rückwandrahmens des Kofferaufbaus 1 vorgesehen ist. Beide Rahmenprofile 14,15 sind an der inneren Decklage 9 und an der äußeren Decklage 10 befestigt und bilden den Abschluss des Dachpaneels 3 nach außen. Dabei erstrecken sich beide Rahmenprofile 14,15 jeweils über die gesamte Länge der Querkanten 8,8'.

Beim dargestellten Ausführungsbeispiel ist die äußere Decklage 10 wie auch die innere Decklage 9 als dünne Blechhaut ausgebildet. Die innere Decklage 9 und die äußere Decklage 10 könnten jedoch auch aus einem Kunststoff gebildet sein. Zudem erstreckt sich über die gesamte Länge des Dachpaneels 3 eine einzige, zusammenhängende Kernlage 12 aus geschäumtem Kunststoff 13, die im Wesentlichen bis an die jeweiligen Kanten 7,7',8,8' des Dachpaneels 3 heranreicht.

Im dargestellten Dachpaneel 3 sind keine nennenswerten zusätzlichen Einbauten in der Kernlage 12 vorhanden. Dies wäre bedarfsweise jedoch möglich. In einem solchen Fall könnten verschiedene Bereiche des geschäumten Kunststoffs 13 vorhanden sein, die nur abschnittsweise zusammenhängen und gemeinsam die Kernlage bilden. Wenn es sich nicht vermeiden lässt, können auch mehrere unabhängig voneinander mit geschäumtem Kunststoff 13 ausgefüllte Hohlräume vorgesehen sein. Dies wäre bei dem Bodenpaneel 4 des in der Fig. 1 dargestellten Kofferaufbaus 1 der Fall, da die innere Decklage des Bodenpaneels 4 zur Aussteifung über separate, quer zum Boden verlaufende Träger gegenüber der äußeren Decklage abgestützt wird. Vorzugsweise sind die so entstehenden, durch die Träger getrennten Bereiche miteinander verbunden, so dass sie gemeinsam ausgeschäumt werden können.

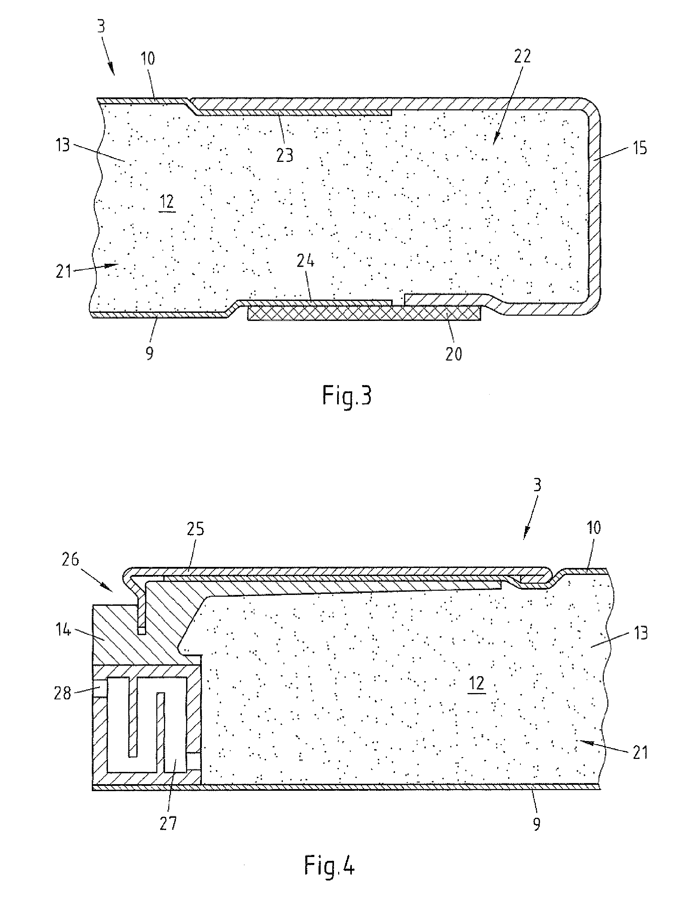

Das Rückwandrahmenprofil 15 weist an seinen seitlichen Enden Anschlüsse 16,17 für die beiden weiteren Rückwandrahmenprofile der Seitenwandpaneele 2 auf. Im Bereich dieser Anschlüsse 16,17 ist zudem jeweils eine Eckverstärkerhälfte vorgesehen, die mit einer korrespondierenden Eckverstärkerhälfte des jeweiligen Seitenwandpaneels 2 zu einem Eckverstärker verbunden wird, der eine Ecke des Kofferaufbaus 1 aussteift, um beispielsweise die Türen 6 zu tragen und Verwindungskräfte aufzunehmen. Zwischen diesen Anschlüssen 16,17 ist das Rückwandrahmenprofil 15 nach außen geschlossen und weist einen im Wesentlichen U-förmigen Querschnitt auf, wie dies in der Fig. 3 dargestellt ist.

Die Fig. 3 zeigt einen vertikalen Schnitt des Dachpaneels 3 entlang der Ebene III-III aus Fig. 2. In der Schnittansicht ist oben die äußere Decklage 10 und unten die innere Decklage 9 vorgesehen, die an ihren jeweiligen Rändern mit dem Rückwandrahmenprofil 15 verbunden sind. Bei der dargestellten Verbindung handelt es sich jeweils um eine Klebeverbindung, die an nicht dargestellten Stellen des Dachpaneels 3 noch durch Nieten, Schrauben oder dergleichen verstärkt sein kann. Dabei ist das Rückwandrahmenprofil 15 unmittelbar mit der äußeren Decklage 10 verklebt, während das Rückwandrahmenprofil 15 nur indirekt, und zwar über ein zusätzliches PVC-Profil 20, mit der inneren Decklage 9 verklebt ist. Dadurch wird ein direkter Kontakt zwischen der inneren Decklage 9, die ebenso wie das Rückwandrahmenprofil 15 aus einem metallischen Werkstoff hergestellt ist, und dem Rückwandrahmenprofil 15 vermieden, was zu einer Kältebrücke führen würde. In diesem Zusammenhang kann anstelle eines PVC-Profils 20 auch ein anderes schlecht wärme leitendes Profil verwendet werden. Auf das Profil könnte auch völlig verzichtet werden, wenn beispielsweise die innere Decklage statt aus einem metallischen Werkstoff aus einem Kunststoff gefertigt wäre.

Das Rückwandrahmenprofil 15 bildet zusammen mit der inneren Decklage 9 und der äußeren Decklage 10 einen Zwischenraum 21, der durch ein Polyurethanmaterial ausgeschäumt ist. Das Polyurethanmaterial bildet also die Kernlage 12 des dargestellten und insoweit bevorzugten Dachpaneels 3. Nicht im Einzelnen dargestellt ist, dass die innere Decklage 9, die äußere Decklage 10 und das Rückwandrahmenprofil 15 angeschäumt sind, so dass sich an den genannten Bauteilen eine daran anhaftende Schwarte des Kunststoffs 13 bildet.

Dies wird dadurch erreicht, dass die Decklagen 9,10 und das Rückwandrahmenprofil 15 bereits vor dem Ausschäumen des Dachpaneels 3 miteinander verbunden werden und den in der Fig. 3 dargestellten Zwischenraum 21 oder Teil eines Hohlraums bilden, in den dann erst anschließend der Kunststoff 13 zum Ausschäumen und Aushärten eingebracht wird. Dabei wird jedoch nicht nur der Zwischenraum 21 zwischen den Decklagen 9,10, sondern auch der nach innen geöffnete Hohlraum 22 des Rückwandrahmenprofils 15 in einem Schritt zusammenhängend ausgeschäumt, so dass keine Spalte oder freie Hohlräume verbleiben, in denen die Wärmedämmung, insbesondere durch konvektiven Wärmetransport, vermindert sein könnte.

Das rückseitige Ende 23 der äußeren Decklage 10 ist in die Kernlage 12 so weit eingelassen, dass auf den Enden das Rückwandrahmenprofil 15 bündig nach außen aufgesetzt werden kann. Damit ergibt sich eine bündige Außenfläche, welche beim Herstellen des Dachpaneels 3 dessen Unterseite in der Form der Schäumanlage darstellt. Das Ende 24 der inneren Decklage 9 ist auch in die Kernlage 12 hinein eingelassen, und zwar genau so weit, um dort ebenfalls bündig das PVC-Profil 20 ankleben zu können. Auch an der Innenseite des Dachpaneels 3 ergibt sich eine ebene Fläche, da auch der entsprechende Rand des Rückwandrahmensprofils 15 in die Kernlage 12 etwa um die Dicke des PVC-Profils 20 eingelassen ist.

In der Fig. 4 ist das stirnseitige Ende des Dachpaneels 3 aus der Fig. 3 dargestellt, wo die innere Decklage 9 und die äußere Decklage 10 über ein Stirnwandrahmenprofil 14 miteinander verbunden, insbesondere aber nicht zwingend, ausschließlich verklebt, sind. Das dargestellte und insoweit bevorzugte Stirnwandrahmenprofil 14 ist zweiteilig ausgebildet. Dies ist aber nicht zwingend erforderlich. Ebenso ist nicht zwingend erforderlich, dass an dem stirnseitigen Ende des Dachpaneels 3 von außen ein Anschlussprofil 25 aufgesetzt ist, das einerseits ebenfalls mit dem Stirnwandrahmenprofil 14 verbunden ist und eine Hinterschneidung 26 zum Anbringen eines nicht dargestellten Dichtungselements bereitstellt. Im Falle eines solchen Anschlussprofils 25 ist es bevorzugt, wenn, wie dies in der Fig. 4 dargestellt ist, das stirnseitige Ende der äußeren Decklage 10 derart in die Kernlage 12 eingelassen ist, dass sich außen ein ebener Übergang zum Anschlussprofil 25 und zudem eine ebene Fläche insgesamt ergibt.

Im dargestellten Stirnwandrahmenprofil 14 ist ein Kanal 27 vorgesehen, der zur Kernlage 12 aus geschäumtem Kunststoff 13 geöffnet ist. Zudem weist der Kanal 27 eine nach außen offene Entlüftungsöffnung 28 auf, aus der verdrängte Luft beim Ausschäumen entweichen kann. Bei dem in der Fig. 4 dargestellten Dachpaneel 3 reicht die Expansionsfront des Schaums und damit der geschäumte Kunststoff 13 als solcher gerade bis an den Eintritt des Kanals 27 heran. Dies sollte beispielhaft für eine minimale Füllmenge an zu schäumendem Kunststoff sein. Wird mehr Kunststoff in den Hohlraum eingebracht, expandiert der Schaum in den Kanal 27 hinein, tritt aber vorzugsweise nicht aus der Entlüftungsöffnung 28 aus. Die Expansionsfront des Schaums kommt also innerhalb des gewunden Kanals 27 zum Erliegen.

Bedarfsweise könnte ein weiteres Profil, vorzugsweise am Rückwandrahmenprofil, vorgesehen sein, das hohl ausgebildet ist und eine von außerhalb des Paneels zugängliche Öffnung zum Zuführen von zu schäumendem Kunststoff aufweist. Der Kunststoff tritt dann vom Hohlraum des Profils durch entsprechend verteilte Öffnungen vergleich mäßigt in den auszuschäumenden Hohlraum ein. Bei dem dargestellten Dachpaneel würde das zusätzliche Profil sich quer zum Paneel erstrecken und damit an der zur Entlüftungsöffnung gegenüberliegenden Kante vorgesehen sein.

## Patentansprüche

1. Paneel, insbesondere Seitenwandpaneel (2) , Dachpaneel (3), Stirnwandpaneel und/oder Bodenpaneel (4), für einen Kofferaufbau (1) eines Lastkraftwagens (L), Anhängers und/oder Aufliegers (A), mit einer Innenseite, einer Außenseite und mehreren umlaufend angeordneten Kanten (7,7',8,8'), wobei an der Innenseite eine innere Decklage (9) und an der Außenseite eine äußere Decklage (10) vorgesehen ist, wobei zwischen der inneren Decklage (9) und der äußeren Decklage (10) eine Kernlage (12) aus geschäumtem Kunststoff (13) vorgesehen ist und wobei an wenigstens einer Kante (7,7',8,8') des Paneels (3) die innere Decklage (9) und die äußere Decklage (10) über wenigstens ein Rahmenprofil (14,15) miteinander verbunden sind,
**dadurch gekennzeichnet, dass** der Kunststoff (13) der Kernlage (12) an das wenigstens eine Rahmenprofil (14,15) angeschäumt ist.

2. Paneel nach Anspruch 1,
**dadurch gekennzeichnet, dass** das wenigstens eine Rahmenprofil (14,15) sich im Wesentlichen entlang der gesamten Kante (7,7',8,8') erstreckt und dass das wenigstens eine Rahmenprofil (14,15) die Kante (7,7',8,8') des Paneels (3) nach außen abschließt.

3. Paneel nach Anspruch 1 oder 2,
**dadurch gekennzeichnet, dass** das wenigstens eine Rahmenprofil (14,15) einen zum Inneren des Paneels (3) geöffneten Hohlraum (22) umschließt und dass der Hohlraum ausgeschäumt ist.

4. Paneel nach einem der Ansprüche 1 bis 3,
**dadurch gekennzeichnet, dass** das wenigstens eine Rahmenprofil ein Rückwandrahmenprofil (15) und/oder ein Stirnwandrahmenprofil (14) ist.

5. Paneel nach Anspruch 4,
**dadurch gekennzeichnet, dass** das Stirnwandrahmenprofil (14) und das Rückwandrahmenprofil (15) zusammen mit der inneren Decklage (9) und der äußeren Decklage (10) einen ausgeschäumten Zwischenraum (21) bilden.

6. Paneel nach einem der Ansprüche 1 bis 5,
**dadurch gekennzeichnet, dass** das wenigstens eine Rahmenprofil, vorzugsweise das Stirnwandrahmenprofil (14), eine Entlüftungsöffnung (28) aufweist.

7. Paneel nach einem der Ansprüche 1 bis 6,
**dadurch gekennzeichnet, dass** das wenigstens eine Rahmenprofil, vorzugsweise das Stirnwandrahmenprofil (14), einen, vorzugsweise mehrfach gewundenen, Kanal (27) zum Auslaufen der Expansionsfront des Kunststoffs (13) beim Schäumen aufweist.

8. Paneel nach Anspruch 7,
**dadurch gekennzeichnet, dass** ein Hohlprofil zum Aufnehmen des Rohmaterials und Verteilen des Rohmaterials, vorzugsweise längs und/oder quer zum Paneel, über eine Reihe von Öffnungen entlang des Hohlprofils vorgesehen ist.

9. Paneel nach einem der Ansprüche 1 bis 8,
**dadurch gekennzeichnet, dass** der geschäumte Kunststoff (13) ein geschäumtes Polyurethanmaterial ist.

10. Paneel nach einem der Ansprüche 1 bis 9,
**dadurch gekennzeichnet, dass** sich das wenigstens eine Rahmenprofil (14,15) bündig zur Außenseite der äußeren Decklage (10) und/oder zur Innenseite des inneren Decklage (9) anschließt.

11. Kofferaufbau mit einem Dachpaneel (3), zwei Seitenwandpaneelen (2), einem Stirnpaneel und einem Bodenpaneel (4),
**dadurch gekennzeichnet, dass** wenigstens das Dachpaneel (3), die zwei Seitenwandpaneele (2), das Stirnpaneel und/oder das Bodenpaneel (4) ein Paneel nach einem der Ansprüche 1 bis 10 ist.

12. Verfahren zur Herstellung eines Paneels, insbesondere Seitenwandpaneel (2), Dachpaneel (3), Stirnwandpaneel und/oder Bodenpaneel (4), für einen Kofferaufbau (1) eines Lastkraftwagens (L), Anhängers und/oder Aufliegers (A), vorzugsweise nach einem der Ansprüche 1 bis 11,
- bei dem eine die Innenseite des Paneels (3) bildende innere Decklage (9) und eine die Außenseite des Paneels bildende äußere Decklage (10) mit wenigstens einem eine Kante (8,8') des Paneels bildenden Rahmenprofil (14,15) verbunden werden,
- bei dem ein Hohlraum zum Ausschäumen mit Kunststoff (13) jedenfalls teilweise durch das wenigstens eine Rahmenprofil (14,15) definiert wird,
- bei dem der Hohlraum zur Bildung einer Kernlage (12) zwischen der inneren Decklage (9) und der äußeren Decklage (10) mit einem Kunststoff ausgeschäumt wird.

13. Verfahren nach Anspruch 12,
bei dem der Kunststoff (13) an das wenigstens eine Rahmenprofil (14,15) angeschäumt wird und unter Ausbildung von Adhäsionskräften am Rahmenprofil (14,15) aushärtet.

14. Verfahren nach Anspruch 12 oder 13,
- bei dem ein Rahmenprofil (15) mit einem zum Innenraum des Paneels (3) geöffneten Hohlraum (22) zur Verbindung mit der inneren Decklage (9) und der äußeren Decklage (10) verwendet wird und
- bei dem der Hohlraum (22) des Rahmenprofil (15) beim Ausschäumen des Hohlraums des Paneels mit dem Kunststoff (13) mit ausgeschäumt wird.

15. Verfahren nach einem der Ansprüche 12 bis 14,
bei dem der zu schäumende Kunststoff in ein im Paneel befindliches Hohlprofil eingebracht und über eine Reihe von Öffnungen über die Länge und/oder Breite des Paneels zur Erzielung eines gleichmäßigen Ausschäumens verteilt wird.

16. Verfahren nach einem der Ansprüche 12 bis 15,
bei dem die Expansionsfront des Kunststoffs (13) beim Ausschäumen in einem separaten, mehrfach gewundenen Kanal (27) zum Erliegen kommt.
